**Europäisches Patentamt**

**European Patent Office**

**Office européen des brevets**

(19)

(11) Veröffentlichungsnummer: **0 178 290
B1**

# (12) EUROPÄISCHE PATENTSCHRIFT

(45) Veröffentlichungstag der Patentschrift:
03.08.88

(51) Int. Cl.⁴: **G 03 B 21/10**

(21) Anmeldenummer: **85890235.6**

(22) Anmeldetag: **26.09.85**

(54) Dia-Betrachter.

(30) Priorität: **05.10.84 AT 3165/84**

(43) Veröffentlichungstag der Anmeldung:
**16.04.86 Patentblatt 86/16**

(45) Bekanntmachung des Hinweises auf die Patenterteilung:
**03.08.88 Patentblatt 88/31**

(84) Benannte Vertragsstaaten:
**AT CH DE FR GB IT LI SE**

(56) Entgegenhaltungen:
**BE - A - 536 005**
**DE - A - 2 829 185**
**US - A - 3 352 205**
**US - A - 3 479 116**

(73) Patentinhaber: **Patent-Treuhand-Gesellschaft für elektrische Glühlampen mbH, Hellabrunner Strasse 1, D-8000 München 90 (DE)**

(72) Erfinder: **Schuch, Albert, Franz Schubertstrasse 14, A-2320 Schwechat (AT)**

(74) Vertreter: **Hamburger, Walter A., Dipl.-Ing., Patentanwaltskanzlei HAMBURGER Postfach 96 Mahlerstrasse 9, A-1015 Wien (AT)**

## Beschreibung

Die Erfindung betrifft einen Dia-Betrachter mit einem Gehäuse, in dem eine Lichtquelle, ein Linsensystem, eine Bildbühne, eine Bildwechseleinrichtung und ein Umlenkspiegel untergebracht sind und das mit einem mit dem Gehäuse gelenkig verbundenen Durchprojektionsschirm sowie mit einer zur Aufstandsfläche des Gehäuses im wesentlichen parallelen Magazin-Führung versehen ist.

Dia-Betrachter dieser Art sollen im Hinblick auf eine bequeme Betrachtungsmöglichkeit einen möglichst steil stehenden Projektionsschirm aufweisen. Bei Dia-Betrachtern mit einem Umlenkspiegel lässt sich das praktisch nicht erreichen, weil das projizierte Bild ab einem gewissen Winkel des Projektionsschirmes verzerrt wird und/oder die Ausleuchtung der Bildecken ungenügend wird. Man hat daher auch schon Dia-Betrachter mit zwei Umlenkspiegeln vorgeschlagen, die jedoch einerseits einen vergrösserten Material- und Herstellungsaufwand erfordern und anderseits eine schlechtere Ausleuchtung wegen unvermeidlicher Lichtverluste ergeben. Jedenfalls haben derartige Dia-Betrachter den Nachteil einer relativ grossen Bauhöhe, wodurch die Aufbewahrung, Lagerhaltung, der Transport od.dgl. platzraubend ist.

Es sind zwar Laufbildbetrachter bekannt, die einen zur Aufstandsfläche geneigten Projektor, einen bewegbaren Umlenkspiegel sowie einen klappbaren Projektionsschirm aufweisen und bei denen zur Filmbetrachtung gegebenenfalls eine speziell ausgebildete Kassette vorgesehen ist (US-PS-3479116, US-PS-3801199). Diese Massnahmen lassen sich jedoch nicht auf einen Dia-Betrachter übertragen, weil bei diesem das Dia-Magazin im wesentlichen horizontal geführt werden muss; dies ist darin begründet, dass einerseits das Magazin bei Betrachtung der ersten und letzten Dias aus dem Gehäuse herausragt und anderseits samt Dias ein erhebliches Gewicht besitzt, das transportiert werden muss. Daher müsste die Magazin-Führung relativ hoch im Gehäuse angeordnet und die Transporteinrichtung mechanisch und leistungsmässig übermässig stark dimensioniert sein. Ferner müssten die Dias schrägliegend durch die Bildwechseleinrichtung verschoben werden, was zu Reibungsverlusten führte und eine starke Bildwechseleinrichtung erforderte. Ausserdem müssten Hilfsmittel vorgesehen sein, die verhindern, dass das Magazin von selbst aus der schrägen Magazin-Führung herausgleitet.

Der Erfindung ist zum Ziel gesetzt, diese Nachteile zu beseitigen und einen Dia-Betrachter zu schaffen, der sowol kompakt mit geringen Aussenabmessungen ist als auch die Dia-Betrachtung auf einen möglichst steilstehenden Projektionsschirm bietet sowie relativ geringen Material- und Herstellungsaufwand erfordert.

Dieses Ziel wird mit einem Dia-Betrachter der eingangs beschriebenen Art dadurch erreicht, dass erfindungsgemäss die optische Achse des Linsensystems unter einem Winkel zur Aufstandsfläche des Gehäuses geneigt ist, dass der Projektionsschirm aus einer an der Oberseite des Gehäuses liegenden Stellung in eine Betriebsstellung schwenkbar und mit einer lichtdichten Abschirmung versehen ist und dass die Bildbühne gelenkig gelagert und aus einer zur Ebene der Magazin-Führung senkrechten Ebene in eine optischen Achse des Linsensystems senkrecht stehende Ebene verschwenkbar ist, wobei der Umlenkspiegel bei in Betriebsstellung befindlichem Projektionschirm in der optischen Achse des Linsensystems angeordnet ist.

Auf diese Weise wird ein Dia-Betrachter geschaffen, der während der Betrachtung einen praktisch beliebig steil stehenden Projektionsschirm aufweist, der zur Aufbewahrung oder zum Transport auf die Oberseite des Gehäuses niedergeschwenkt werden kann, wodurch die Aussenabmessungen des Gehäuses äusserst gering gehalten werden können. Ausserdem sind wegen der verschwenkbaren Bildbühne dem Neigungswinkel der optischen Achse hinsichtlich der Magazinführung oder den zu verwendenden herkömmlichen Magazinen keinerlei Grenzen gesetzt, welche wegen ihres Gewichtes im beladenen Zustand möglichst horizontal geführt werden sollen.

Obwohl die lichtdichte Abschirmung aus einem starren Bauteil bestehen kann, ist gemäss einer bevorzugten Weiterbildung der Erfindung die Abschirmung von einem an der Oberseite des Gehäuses angebrachten Balg gebildet.

Herkömmliche Dia-Betrachter weisen halbautomatische oder vollautomatische Bildwechseleinrichtungen auf, wobei letztere auch manuell betätigt werden können. Es ist erwünscht, diese letztgenannte Bildwechseleinrichtung auch bei der Erfindung vorzusehen. Obwohl die Verschwenkung der Bildbühne von einem eigenen Antrieb durchgeführt werden könnte, wird vorgezogen, die Bildbühne mit der Bildwechseleinrichtung mechanisch zu kuppeln, wodurch mit einem einzigen Antrieb das Auslangen gefunden und die manuelle Betätigung vereinfacht wird.

Dabei kann die Bildwechseleinrichtung wie bekannt einen Schieber aufweisen, an dem eine an der Bildbühne angreifende Steuerkurve ausgebildet ist, wobei die Bildbühne in ihrer jeweiligen Stellung an einem Anschlag anliegt. Dies ergibt eine besonders einfache mechanische Kupplung.

Von Vorteil ist es weiter, wenn die Bildbühne in ihrer zur Ebene der Magazin-Führung senkrechten Stellung mittels einer schieberbetätigten lösbaren Rasteinrichtung arretiert ist. Somit ist gewährleistet, dass das Einsetzen des Dias in die Bildbühne nicht beeinträchtigt werden kann.

Weiter kann die Bildbühne in ihre zur optischen Achse des Linsensystems senkrechte Stellung von einer Feder vorgespannt sein. Hierdurch ist ein Stehenbleiben der Bildbühne in der anderen Stellung verhindert und eine exakte Ausrichtung der Bildbühne erzielt, obwohl das Verschwenken auch unter Schwerkrafteinfluss erfolgen könnte.

Ferner kann die Bildbühne mit einer Dämpfungseinrichtung zusammenwirken, um Geräusche und Beschädigungen hintanzuhalten.

Eine weitere Verminderung der Bauhöhe des Gehäuses lässt sich erzielen, wenn der Umlenkspiegel höhenverschiebbar im Gehäuse gelagert ist.

Dabei ist vorteilhaft, wenn er mit einer Feder in seine obere, durch Anschläge begrenzte Lage vorgespannt ist, weil dadurch das Zusammenlegen des Dia-Betrachters erleichtert ist.

Um das Zusammenlegen des Dia-Betrachters weiter zu erleichtern, ist es günstig, wenn der Balg an der Oberseite sowie etwa in der Mitte des Umlenkspiegels befestigt ist.

Ausserdem kann der Umlenkspiegel in seiner unteren Lage mit einem elektrischen Schalter zusammenwirken, an den zumindest die Lichtquelle angeschlossen ist. Dies ergibt den Vorteil, dass bei zusammengelegtem Dia-Betrachter die Lichtquelle stets ausgeschaltet ist und keine Überhitzung auftreten kann. Weiter ist die Handhabung des Dia-Betrachters vereinfacht.

Um die Ausleuchtung der Bildecken des projizierten Dias zu verbessern, weist das Linsensystem in vorteilhafter Weise eine asphärische Kondensorlinse auf. Die Erfindung wird nachstehend anhand eines bevorzugten Ausführungsbeispiels näher erläutert, das in den Zeichnungen schematisch dargestellt ist; es zeigen:

Fig. 1 einen Schnitt durch den Dia-Betrachter in zusammengelegtem Zustand;

Fig. 2 einen entsprechenden Schnitt im Betriebszustand;

Fig. 3 in schaubildlicher Ansicht die Bildbühne und einen Teil des Schiebers der Bildwechseleinrichtung, und

Fig. 4 eine Draufsicht auf die Bildbühne sowie die Rasteinrichtung.

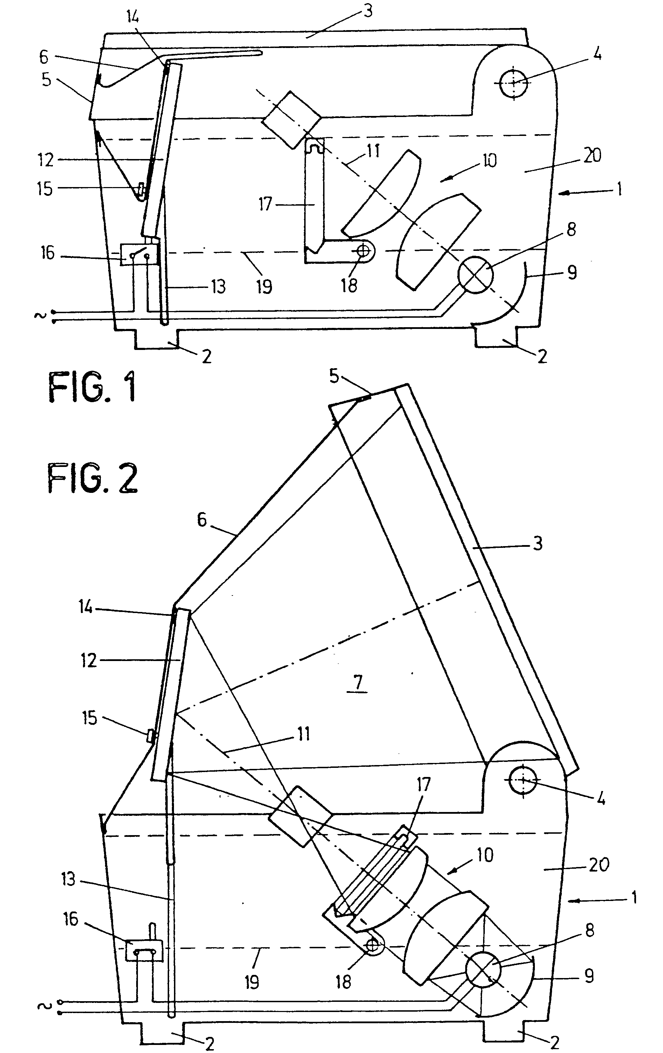

Wie aus Fig. 1 und 2 hervorgeht, weist der Dia-Betrachter ein Gehäuse 1 mit Füssen 2 auf, an dem ein Durchprojektionsschirm 3 schwenkbar angebracht ist, wobei die Schwenkachse 4 an der Vorderseite des Gehäuses 1 verläuft. Der von einem Rahmen 5 umgebene Projektionsschirm 3 weist im wesentlichen die Abmessungen der Gehäuseoberseite auf, ist in seiner abgeschwenkten Lage (Fig. 1) nach Art eines Deckels auf dem Gehäuse 1 angeordnet und in dieser Lage von einem (nicht gezeigten) Verschluss festgehalten. Nach Lösen dieses Verschlusses wird der Projektionsschirm 3 vorzugsweise von einer (nicht gezeigten) Feder in seine in Fig. 2 gezeigte Betriebsstellung hochgeschwenkt und in dieser Stellung von (nicht dargestellten) Anschlägen gehalten.

An der Gehäuseoberseite einerseits und am Rahmen 5 des Projektionsschirmes 3 anderseits ist eine lichtdichte Abschirmung in Form eines Balges 6 aus Stoff od. dgl. angebracht, wodurch in der hochgeschwenkten Stellung des Projektionsschirmes 3 ein lichtdicht abgeschirmter Innenraum 7 geschaffen ist (Fig. 2).

In dem Gehäuse 1 ist an dessen Vorderseite eine Lichtquelle 8 samt Hilfsspiegel 9 angeordnet. Weiter ist im Gehäuse 1 ein lichtsammelndes Linsensystem 10 untergebracht, dessen optische Achse 11 unter einem Winkel zur von den Füssen 2 des Gehäuses 1 definierten Aufstandsfläche des Gehäuses 1 geneigt ist. Zur besseren Ausleuchtung der Bildecken ist eine Kondensorlinse des Linsensystems 10 asphärisch gestaltet.

An der Rückseite des Gehäuses 1 ist ein höhenbeweglicher Umlenkspiegel 12 vorgesehen, der aus einer abgesenkten Ruhelage (Fig. 1) bei Hochschwenken des Projektionsschirmes 3 durch Federkraft in eine durch (nicht gezeigte) Anschläge begrenzte Betriebslage (Fig. 2) hochgeschoben wird. Zu diesem Zweck ist der Umlenkspiegel 12 in im wesentlichen vertikalen Führungen 13 gleitend gelagert. In seiner Betriebsstellung ist der Umlenkspiegel 12 in der optischen Achse 11 des Linsensystems 10 derart angeordnet, dass er das von diesem ausgehende Licht auf den Projektionsschirm 3 umlenkt.

Weiter ist der lichtdichte Balg 6 sowohl an der Oberseites des Umlenkspiegels 12 z.B. mittels eines Klebebandes 14 als auch etwa in der Mitte z.B. mittels eines Steckstiftes 15 befestigt. Der Zweck dieser Massnahmen wird nachstehend erläutert.

Der abgesenkte Umlenkspiegel 12 betätigt einen elektrischen Schalter 16, z.B. einen Mikroschalter, an den zumindest die Lichtquelle 8 angeschlossen ist und der bei abgesenktem Umlenkspiegel 12 ausgeschaltet ist. Vorzugsweise sind an den Schalter 16 sämtliche elektrische Stromkreise, wie die eines Lüftermotors für die Lichtquelle 8, des elektrischen Antriebes einer Bildwechseleinrichtung usw. angeschlossen.

Im Gehäuse 1 ist ferner eine Bildbühne 16 um eine Achse 17 schwenkbar gelagert, die mit Hilfe eines noch zu beschreibenden Mechanismus aus einer Projektionslage (Fig. 2), in der sie auf die optische Achse 11 des Linsensystems 10 senkrecht steht, in eine Bildwechsellage (Fig. 1) schwenkbar ist, in der sie in einer auf die Längsachse einer Magazinführung 18 senkrechten Ebene liegt. Die Magazinführung 18 verläuft in üblicher Weise parallel zur Aufstandsfläche des Gehäuses 1 und ist an der Unterseite eines das Gehäuse 1 durchsetzenden Magazinschachtes 19 angeordnet.

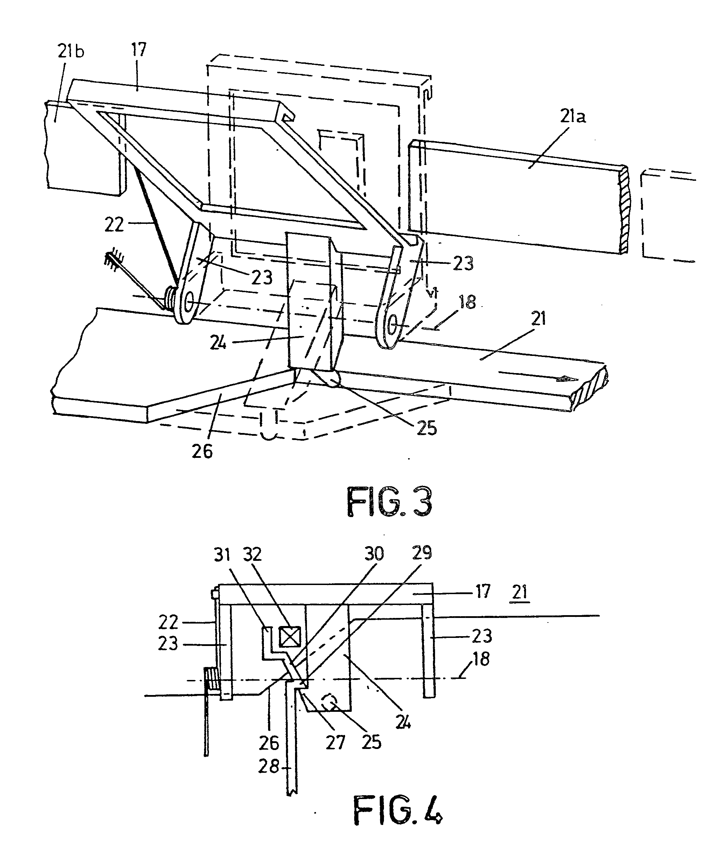

Fig. 3 zeigt die Bildbühne 17 in schaubildlicher Ansicht in ihrer Projektionslage, wobei ihre Bildwechsellage mit strichlierten Linien angedeutet ist. Zur Steuerung der Bildbühne 17 zwischen diesen beiden Lagen ist die Bildwechseleinrichtung mit einem Schieber 21 ausgestattet, der auf bekannte Weise ausgebildet und vorzugsweise manuell und/oder motorisch betätigbar ist. In der Projektionslage, in der die Bildbühne 17 auf die optische Achse 11 des Linsensystems 10 senkrecht steht, liegt die Bildbühne 17 an (nicht gezeigten) Anschlägen und ist von einer Feder 22 gegen diese Anschläge gespannt.

Die Bildbühne 17 ist an ihrer Unterseite mit abstehenden Armen 23 versehen, mit denen sie auf die Achse 18 bildenden Zapfen (nicht gezeigt) sitzt, die fest im Gehäuse 1 angebracht sind. Weiter besitzt die Bildbühne 17 an ihrer Unterseite einen Fortsatz 24, der nach derselben Seite wie die Arme 23 weist und am freien Ende einen Zapfen 25 mit Halbkugelkopf trägt. Dieser Zapfen 25 wirkt mit einer am Schieber 21 ausgebildeten Steuerkurve 26 zusammen, wie noch erläutert wird.

Fig. 4 zeigt eine Draufsicht auf die in ihrer Bildwechsellage befindliche Bildbühne 17. Um die Bildbühne 17 zwecks störungsfreien Bildwechsels in der genannten Lage vorübergehend zu arretieren, ist der Fortsatz 24 mit einer Rastnase 27 versehen, an der eine insbesondere aus Kunststoff gefertigte Feder 28 angreift. Die Feder 28 besitzt eine mit der Rastnase 27 zusammenwirkende Nase 29, eine an diese anschliessende Schrägfläche 30 sowie einen an diese anschliessenden Fortsatz 31. Am Schieber 21 ist an vorbestimmter Stelle ein Anschlag 32 vorgesehen, der mit dem Fortsatz 31 zum Lösen der Feder 28 von der Rastnase 27 zusammenwirkt.

Nachstehend wird die Funktionsweise des erfindungsgemässen Dia-Betrachters beschrieben.

Nachdem der Verschluss des Rahmens 5 gelöst worden ist, wird der Projektionsschirm 3 durch Federkraft (oder bloss manuell) aus der in Fig. 1 gezeigten Stellung an der Gehäuseoberseite in die in Fig. 2 dargestellte, durch Anschläge begrenzte Betriebsstellung verschwenkt. Dabei wird der Umlenkspiegel 2 freigegeben und durch Federkraft in seine durch Anschläge begrenzte obere Lage hochgeschoben, wobei einerseits der Balg 6 entfaltet und anderseits der elektrische Schalter 16 eingeschaltet wird.

Der Schieber 21 der Bildwechseleinrichtung ist ins Gehäuse 1 eingeschoben, so dass sich die Bildbühne 17 in ihrer in Fig. 2 bzw. 3 (volle Linien) gezeigten Lage befindet. Nachdem im Magazin-Schacht 20 ein Dia-Magazin angeordnet worden ist, wird der Schieber 21 manuell oder motorisch aus dem Gehäuse 1 ausgeschoben, wobei die Steuerkurve 26 am Zapfen 25 angreift, wodurch die Bildbühne 17 um ihre Achse 18 verschwenkt und in ihrer aufgerichteten Lage dadurch festgehalten wird, dass die Feder 28 mit ihrer Schrägfläche 30 über die Rastnase 27 der Bildbühne 17 gleitet und sodann mit ihrer Nase 29 hinter der Rastnase 27 einrastet (Fig. 3 – strichlierte Linien, Fig. 4).

Beim folgenden Einschieben des Schiebers 21 ins Gehäuse 1 erfasst der Finger 21a des Schiebers 21 ein Dia im Dia-Magazin und schiebt es in die aufgerichtete Bildbühne 17. Am Ende der Einschubbewegung schlägt der Anschlag 32 am Fortsatz 31 der Feder 28 an und lenkt diese soweit aus, dass die Rastnase 27 der Bildbühne 17 freigegeben wird. Sobald die Bildbühne 17 frei ist, schwenkt sie unter Einwirkung der Feder 22 in die Projektionslage (Fig. 3 – volle Linien); vorzugsweise ist eine Dämpfung vorgesehen, um den Anschlag der Bildbühne 17 an den die Projektionslage definierenden Anschlägen zu dämpfen. Diese Lage ist in Fig. 2 schematisch dargestellt, wobei ein Dia in der Bildbühne 17 angedeutet ist.

Das in der Bildbühne 17 befindliche Dia wird auf den Projektionsschirm 3 projiziert, wo es betrachtet werden kann.

Nach der Betrachtung wird der Schieber 21 ausgeschoben, wobei mittels der am Zapfen 25 angreifenden Steuerkurve 26 die Bildbühne 17 aufgerichtet und mit Hilfe der Feder 28 festgehalten wird; zugleich wird die Feder 22 gespannt. Nachdem die Bildbühne 17 in dieser Lage arretiert worden ist, greift eine am Schieber 21 vorgesehene Fahne 21b am Dia an und befördert es aus der Bildbühne 17 in das Dia-Magazin. Der Abstand zwischen dem Finger 21a und der Fahne 21b des Schiebers 21 muss wegen der Steuerkurve 26 grösser sein als bei üblichen Schiebern.

Ist die Dia-Betrachtung beendet, so wird der Projektionsschirm 3 gegen die Kraft der Federbelastung abwärtsgeschwenkt, wobei der Balg 6 zwischen Rahmen 5 und Umlenkspiegel 12 eingefaltet wird. Beim weiterem Abwärtsschwenken des Projektionsschirmes 3 legt sich dieser an die Oberkante des Umlenkspiegels 12 und schiebt diesen in seinen Führungen 13 gegen die Kraft der Feder nach unten. Dabei wird der Balg 6 mit dem Steckstift 15 selbsttätig ins Gehäuse 1 eingezogen. Am Ende der Absenkbewegung schaltet der Umlenkspiegel 12 den elektrischen Schalter 16 aus, so dass der Dia-Betrachter vom Speisestrom getrennt ist. Nach Verschliessen des Rahmens 5 nimmt der Dia-Betrachter wieder seinen in Fig. 1 gezeigten Ausser-Betriebszustand ein.

Die Erfindung schafft somit einen Dia-Betrachter, dessen Aussenabmessungen im Ausser-Betriebszustand äusserst gering sind, was sich für die Lagerhaltung, den Versand und die Aufbewahrung von Vorteil erweist. Im Betriebszustand steht der Projektionsschirm 3 sehr steil, wodurch die Dia-Betrachtung bequem erfolgen kann.

Im Rahmen der Erfindung sind zahlreiche Abwandlungen von dem dargestellten und beschriebenen Ausführungsbeispiel möglich. So kann der Balg 6 durch eine starre, gegebenenfalls teleskopartig zusammenschiebbare Abschirmung ersetzt werden. Der Umlenkspiegel 12 könnte an Schwenkarmen angebracht oder um eine an seiner Unterseite verlaufende Achse verschwenkbar gelagert sein.

Ferner könnte eine starre Bildbühne vorgesehen sein, an die ein in ihrer Ebene angeordneter Dia-Kanal anschliesst. Denkbar ist auch eine schräge, gegebenenfalls verschwenkbare Magazin-Führung.

Anderseits könnte das Verschwenken der Bildbühne von einem Elektromotor oder einem Solenoid gesteuert sein.

Infolge der asphärischen Kondensorlinse sind die Bildecken des projizierten Dias gut ausgeleuchtet. Die asphärische Kondensorlinse bietet den weiteren Vorteil einer gegenüber bekannten Linse geringeren Dicke.

**Patentansprüche**

1. Dia-Betrachter mit einem Gehäuse, in dem eine Lichtquelle, ein Linsensystem, eine Bildbühne, eine Bildwechseleinrichtung und ein Umlenkspiegel untergebracht sind und das mit einem mit dem Gehäuse gelenkig verbundenen Durchprojektionsschirm sowie mit einer zur Aufstandsfläche des Gehäuses im wesentlichen parallelen Magazin-Führung versehen ist, dadurch gekennzeichnet, dass die optische Achse (11) des Linsensystems (10) unter einem Winkel zur Aufstandsfläche des Gehäuses (1) geneigt ist, dass der Projektionsschirm (3) aus einer an der Oberseite des Gehäuses (1) liegenden Stellung in eine Betriebsstellung verschwenkbar und mit einer lichtdichten Abschirmung versehen ist und dass die Bildbühne (17) gelenkig gelagert und aus einer zur Ebene der Magazin-Führung (19) senkrechten Ebene in eine zur optischen Achse (11) des Linsensystems (10) senkrecht stehende Ebene verschwenkbar ist, wobei der Umlenkspiegel (12) bei in Betriebsstellung befindlichem Projektionsschirm (3) in der optischen Achse (11) des Linsensystems (10) angeordnet ist.

2. Dia-Betrachter nach Anspruch 1, dadurch gekennzeichnet, dass die Abschirmung von einem an der Oberseite des Gehäuses (1) angebrachten Balg (6) gebildet ist.

3. Dia-Betrachter nach Anspruch 1 oder 2, dadurch gekennzeichnet, dass die Bildbühne (17) mit der Bildwechseleinrichtung mechanisch gekuppelt ist.

4. Dia-Betrachter nach Anspruch 3, dadurch gekennzeichnet, dass die Bildwechseleinrichtung wie bekannt einen Schieber (21) aufweist, an dem eine an der Bildbühne (17) angreifende Steuerkurve (26) ausgebildet ist, wobei die Bildbühne (17) in ihrer jeweiligen Stellung an einem Anschlag anliegt.

5. Dia-Betrachter nach einem der Ansprüche 1 bis 4, dadurch gekennzeichnet, dass die Bildbühne (17) in ihrer zur Ebene der Magazin-Führung (19) senkrechten Stellung mittels einer schieberbetätigten lösbaren Rasteinrichtung (27, 28) arretiert ist.

6. Dia-Betrachter nach einem der Ansprüche 1 bis 5, dadurch gekennzeichnet, dass die Bildbühne (17) in ihre zur optischen Achse (11) des Linsensystems (10) senkrechte Stellung von einer Feder (22) vorgespannt ist.

7. Dia-Betrachter nach einem der Ansprüche 1 bis 6, dadurch gekennzeichnet, dass die Bildbühne (17) mit einer Dämpfungseinrichtung zusammenwirkt.

8. Dia-Betrachter nach einem der Ansprüche 1 bis 7, dadurch gekennzeichnet, dass der Umlenkspiegel (12) höhenverschiebbar im Gehäuse (1) gelagert ist.

9. Dia-Betrachter nach Anspruch 8, dadurch gekennzeichnet, dass der Umlenkspiegel (12) mit einer Feder in seine obere, durch Anschläge begrenzte Lage vorgespannt ist.

10. Dia-Betrachter nach einem der Ansprüche 2 bis 9, dadurch gekennzeichnet, dass der Balg (6) an der Oberseite sowie etwa in der Mitte des Umlenkspiegels (12) befestigt ist.

11. Dia-Betrachter nach einem der Ansprüche 8 bis 10, dadurch gekennzeichnet, dass der Umlenkspiegel (12) in seiner unteren Lage mit einem elektrischen Schalter (16) zusammenwirkt, an den zumindest die Lichtquelle (8) angeschlossen ist.

12. Dia-Betrachter nach einem der Ansprüche 1 bis 11, dadurch gekennzeichnet, dass das Linsensystem (10) eine asphärische Kondensorlinse aufweist.

**Claims**

1. A slide viewer comprising a housing in which a light source, a lens system, a slide holder, a slide changer and a deflecting mirror are accommodated and which is provided with a screen for rear projection, which is hinged to the housing, and with a magazine track which is substantially parallel to the surface on which the housing is supported, characterized in that optical axis (11) of the lens system (10) is inclined at an angle to the surface on which the housing (1) is supported, the projection screen (3) is pivotally movable from a position in which it lies on the top of the housing (1) to an operative position and is provided with a lighttight shield, the slide holder (17) is hinged and is pivotally movable from a plane that is at right angles to the plane of the magazine track (19) to a plane that is at right angles to the optical axis (11) of the lens system, and the deflecting mirror (12) is disposed in the optical axis (11) of the lens system (10) when the projection screen (3) is in its operative position.

2. A slide viewer according to claim 1, characterized in that the shield consists of a bellows (6) attached to the to of the housing (1).

3. A slide viewer according to claim 1 or 2, characterized in that the slide holder (17) is mechanically coupled to the slide changer.

4. A slide viewer according to claim 3, characterized in that the slide changer comprises in known manner a slider (21), which is formed with a cam (26), which engages the slide holder (17), and the slide holder (17) engages a stop in each of its positions.

5. A slide viewer according to any of claims 1 to 4, characterized in that the slide holder (17) is locked by a slider-actuated, releasable detent device (27, 28) in that position in which the slide holder (17) is at right angles to the plane of the magazine track (19).

6. A slide viewer according to any of claims 1 to 5, characterized in that the slide holder (17) is urged by a spring to that position in which the slide holder (17) is at right angles to the optical axis (11) of the lens system (10).

7. A slide viewer according to any of claims 1 to 6, characterized in that the slide holder (17) cooperates with damping means.

8. A slide viewer according to any of claims 1 to 7, characterized in that the deflecting mirror (12) is mounted in the housing (1) for a displacement in height.

9. A slide viewer according to claim 8, characterized in that the deflecting mirror (12) is urged by a spring to an upper position, which is defined by stops.

10. A slide viewer according to any of claims 2 to 9, characterized in that the bellows (6) are secured to the deflecting mirror (12) at their top and approximately in the middle.

11. A slide viewer according to any of claims 8 to 10, characterized in that the deflecting mirror (12) in its lower position cooperates with an electric switch (16), to which at least the light source (8) is connected.

12. A slide viewer according to any of claims 1 to 11, characterized in that the lens system (10) comprises an aspherical condens condenser lens.

## Revendications

1. Visionneuse de diapositives comportant un boîtier dans lequel sont logés une source de lumière, un système de lentilles, un porte-diapositives, un dispositif de changement d'images et un miroir déflecteur et qui est pourvu d'un écran de rétro-projection relié par une articulation au boîtier ainsi que d'un guidage de magasin substantiellement parallèle à la surface d'appui du boîtier, caractérisée en ce que l'axe optique (11) du système de lentilles (10) est incliné dans un certain angle par rapport à la surface d'appui du boîtier (1), que l'écran de projection (3) peut être pivoté d'une position couchée sur la face supérieure du boîtier (1) dans une position de service et est pourvu d'un couvercle étanche à la lumière et que le porte-diapositives (17) est logé sur une articulation et peut être basculé d'un plan vertical par rapport au plan du guidage du magasin (19) en un plan vertical par rapport à l'axe optique (11) du système de lentilles, le miroir déflecteur (12) étant disposé dans l'axe optique (11) du système de lentilles (10) lorsque l'écran de projection (3) se trouve en position de service.

2. Visionneuse de diapositives selon la revendication 1, caractérisée en ce que le couvercle est formé par un soufflet (6) sur le dessus de boîtier (1).

3. Visionneuse de diapositives selon les revendications 1 ou 2, caractérisée en ce que le porte-diapositives (17) est mécaniquement couplé à l'installation de changement d'images.

4. Visionneuse de diapositives selon la revendication 3, caractérisée en ce que le dispositif de changement d'image possède un tiroir (21) en soi connu sur lequel une canne (26) est formée qui s'engage dans le porte-diapositives (17), le porte-diapositives (17) touchant dans ses différentes positions une butée.

5. Visionneuse de diapositives selon l'une des revendications 1 à 4, caractérisée en ce que le porte-diapositives (17) dans sa position verticale par rapport au plan de guidage du magasin (19) est arrêté au moyen d'un dispositif d'encliquetage (27, 28) qui peut-être détaché et qui est actionné par un poussoir.

6. Visionneuse de diapositives selon l'une des revendications 1 à 5, caractérisée en ce que le porte-diapositives (17), dans sa position verticale par rapport à l'axe optique (11) du système de lentilles (10) est chargé par la force d'un ressort (22).

7. Visionneuse de diapositives selon l'une des revendications 1 à 6, caractérisée en ce que le porte-diapositives (17) est interactif avec un dispositif d'amortissage.

8. Visionneuse de diapositives selon l'une des revendications 1 à 7, caractérisée en ce que le miroir déflecteur (12) est logé dans le boîtier (1) de manière à pouvoir être déplacé en verticale.

9. Visionneuse de diapositives selon la revendication 8, caractérisée en ce que le miroir déflecteur (12) est exposé à la force d'un ressort dans sa position supérieure qui est limitée par des butées.

10. Visionneuse de diapositives selon l'une des revendications 2 à 9, caractérisée en ce que le soufflet (6) est fixé sur le dessus ainsi qu'environ au milieu du miroir déflecteur (12).

11. Visionneuse de diapositives selon l'une des revendications 8 à 10, caractérisée en ce que le miroir déflecteur (12) coopère dans sa position inférieure avec un interrupteur électrique (16) qui est connecté avec au moins la source de lumière (8).

12. Visionneuse de diapositives selon l'une des revendications 1 à 11, caractérisée en ce que le système de lentilles (10) possède une lentille condensatrice asphérique.

0178290

FIG. 1

FIG. 2

FIG. 3

FIG. 4